# EUROPÄISCHE PATENTANMELDUNG

(11) **EP 1 677 537 A1**
(43) Veröffentlichungstag der Anmeldung: **05.07.2006**
(21) Anmeldenummer: 04107078.0
(22) Anmeldetag: 31.12.2004
(51) Int. Cl.: H04N 7/167, G07C 9/00

(54) **Verfahren und Endgerät zum zugangsbeschränkten Empfang von Nutzdaten sowie Fernserver**

(71) Anmelder: Swisscom Mobile AG, 3050 Bern (CH)
(72) Erfinder: Ritter, Rudolf, 3052 Zollikofen (CH)
(74) Vertreter: P&TS Patents & Technology Surveys SA

(57) **Zusammenfassung**

Es ist ein Verfahren zum zugangsbeschränkten Empfang von Daten offenbart. ln einem Fernserver (5) werden Daten zur Dekodierung von Nutzdaten mit dem ersten Schlüssel, der aufgrund von biometrischen oder daraus abgeleiteter Schlüsseldaten des Benutzers erstellt wurde, verschlüsselt und programmbegleitend mit Daten durch ein Broadcastsystem versendet. ln einem Endgerät (1) des Benutzers werden die durch das Broadcastsystem empfangenen Informationen mit dem zweiten Schlüssel, der ebenfalls aufgrund von biometrischen oder daraus abgeleiteter Schlüsseldaten des Benutzers erstellt wurde, entschlüsselt. Mit den empfangenen, entschlüsselten Daten zur Dekodierung von Nutzdaten werden die Nutzdaten decodiert und die empfangenen Nutzdaten können wiedergegeben werden. Die vorliegende Erfindung bezieht sich auch auf den Fernserver (5) und das Endgerät (1).

## Beschreibung

### Technisches Geb i et

Die Erfindung bezieht sich auf ein Verfahren zum zugangsbeschränkten Empfang von Audio- und/oder Videodaten gemäss dem unabhängigen Verfahrensanspruch auf einen Fernserver entsprechend dem unabhängigen Anspruch 18 und auf ein Endgerät entsprechend dem unabhängigen Anspruch 21.

### Stand der Technik

Derartige Verfahren werden bereits vielfältig eingesetzt, etwa beim Zugang von Internetseiten oder beim Empfangen von Fernsehprogrammen, die im sogenannten Bezahl-Fernsehen (" Pay-TV") ausgestrahlt werden. Im Bezahl-Fernsehen werden häufig aktuelle Berichterstattungen wie etwa eine Direktübertragung von Sportveranstaltungen ausgestrahlt, für deren Empfang aber Zugangsgebühren entrichtet werden müssen. Zum Empfang ist daher im Gegensatz zu den von den öffentlich rechtlichen Programmanbietern ausgestrahlten Programmen das Vorhandensein zusätzlicher Geräte und Nachweisen der Empfangs- oder Zugangsberechtigung Voraussetzung. So ist der Empfang von digital ausgestrahlten Programmen im Bezahl-Fernsehen nur mit einem Decoder, der eine codiert gesendete Ausstrahlung zum Empfang umwandeln muss, und einer Empfangsberechtigung etwa in Form einer Chip-Karte möglich. Der Decoder wird entweder direkt vom Programmanbieter herausgegeben oder muss bei sonstiger Beschaffung im Fachhandel der vom Programmanbieter verwendeten Codierungsart entsprechend arbeiten.

Die in der Regel direkt vom Programmanbieter zur Verfügung gestellte Chip-Karte enthält benutzerspezifische geheime Schlüssel, die zur Entschlüsselung von sicherheitsbezogenen Nachrichten, den sogenannten Nachrichten zur Handhabung der Empfangsberechtigung (entitlement management messages, EM M) dienen. Die EMM-Nachrichten legen fest, für welche Programme welcher Benutzer eine Empfangsberechtigung kommerziell erworben hat. Die EMM-Nachrichten enthalten neben Empfangsberechtigungen zusätzliche Informationen wie beispielsweise auch einen kryptographischen Schlüssel, mit dem Nachrichten zur Kontrolle der Empfangsberechtigung (entitlement control messages, im Folgenden auch kurz ECM) entschlüsselt werden können.

Die ECM-Nachrichten enthalten vorbestimmte Empfangsberechtigungen und den Sitzungsschlüssel, mit dem verschlüsselt übertragene Sendungen oder Programme decodiert werden können. Die ECM-Nachrichten werden einmalig oder in kurzen Abständen fortdauernd während der Ausstrahlung eines Programmsan die Empfänger gesendet. Wird der Sitzungsschlüssel ständig gewechselt, müssen mit jedem Wechsel des Sitzungsschlüsselsaktualisierte ECM-Nachrichten an den Benutzer gesendet und von diesem empfangen werden.

Mit einer sogenannten Set-Top-Box, die der Benutzer von dem Anbieter erhält, werden die EM M - und ECM-Daten decodiert, sofern der Benutzer die Berechtigung dazu erlangt hat. Solche Systeme sind auch unter dem Begriff Conditional Access (CA) bekannt geworden. Nachteilig an dem System ist jedoch, dassjede Person die Daten decodieren kann, sofern sie in Besitz der Set-Top-Box und der Smart-Cart gelangt. Eine persönliche Berechtigungsprüfung vor dem Empfang von Daten ist in einer einfachen Ausführungsform nicht vorgesehen. En Nachteil ist auch, dass die Karte mitgenommen werden muss, um die abonnierten Sendungen an einen anderen Ort (Ferien, Geschäftsreise, etc.) zu sehen.

Die Deutsche Offenlegungsschrift DE-A1-102 48 544 offenbart deshalb ein Verfahren und ein System, in dem die Sicherheitsstruktur eines Mobilfunknetzes, welche auf den in Mobilfunktelefonen engesetzten SM-Karten basiert, Pay-TV-Anbietern und deren Kunden verfügbar macht. Obwohl in der beschriebenen Ausführungsform über das Mobiltelefon eine verbesserte Personalisierung gegeben ist, hat der Benutzer keine Gewährleistung von Datensicherheit, wenn andere in seiner Wohnung wohnende Personen, sowohl Zugang zu dem Dekoder alsauch zu dem Mobiltelefon desAbonnenten haben.

Aufgrund der genannten Nachteile sind verschiedene Sicherungsmechanismen bekannt geworden, die biometrische Informationen des Benutzerszur zusätzlichen Scherung verwenden. JP 2000-341662 verwendet beispielsweise eine Set Top-Box, in die zuvor der Fingerabdruck eines Benutzersabgespeichert wurde. Um die Karte zu entsperren, mussder Benutzer sein Fingerabdruck abnehmen lassen. Dieser wird mit dem in der Set-Top-Box abgespeicherten Abdruck lokal verglichen. Ist der Vergleich positiv, werden die empfangenen Daten auf oben beschriebene Weise decodiert.

Die Amerikanische Offenlegungsschrift USA-2003/065957 beschreibt eine Chipkarte für eine Set Top-Box, in dem ebenfalls der Fingerabdruck lokal gespeichert wird. Während der Decodierung werden die speicherten Fingerabdrücke mit den von Benutzer abgenommen Fingerabdrücken verglichen. Zusätzlichen werden weitere Informationen (Geburtstag, etc.) abgefragt. Der Vorteil einessolchen Systems ist, dass zwischen verschiedenen Familienmitgliedern unterschieden werden kann.

Aus WO-A-2003/53060 und WO-A-2004/55717 sind Fernbedienungen bekannt geworden, mit denen Fingerabdruck gelesen und verwendet werden können.

### Darstellung der Erfindung

Der Erfindung liegt die Aufgabe zugrunde, ein Verfahren und eine Vorrichtung zum Empfang von zugangsbeschränkten Daten wie beispielsweise Bezahl-Fernsehen zur Verfügung zu stellen, die für eine Erhöhung der Sicherheit gegen Missbrauch sorgen.

Der Erfindung liegt ferner die Aufgabe zugrunde, eine erste Vorrichtung zu schaffen, in der eine personengebundene Verschlüsselung von Nutzdaten möglich ist und eine zweite Vorrichtung zu schaffen, in der eine personengebundene Entschlüsselung der in der ersten Vorrichtung verschlüsselten Nutzdaten möglich ist.

Die Aufgabe wird erfindungsgemässdurch ein Verfahren zum zugangsbeschränkten Empfang von Daten gelöst, wobei das Verfahren die folgenden Verfahrensschritte umfasst
- (a): ein erster Schlüssel zur Verschlüsselung von Daten und ein zweiter Schlüssel zur Entschlüsselung der mit dem ersten Schlüssel verschlüsselten Daten werden aufgrund der biometrischen oder daraus abgeleiteter Schlüsseldaten des Benutzers erstellt,
- (b): in einem Fernserver werden Daten zur Dekodierung von Nutzdaten mit dem ersten Schlüssel verschlüsselt,
- (c): die verschlüsselten Daten zur Dekodierung von Nutzdaten werden an mindestensein erstes Endgerät des Benutzers gesendet,
- (d): die codierten Nutzdaten werden durch ein Broadcastsystem zum Benutzer versendet und in einem zweiten Endgerät des Benutzers empfangen werden,
- (e): in dem zweiten Endgerät des Benutzerswerden die empfangenen Daten zur Dekodierung von Nutzdaten mit dem zweiten Schlüssel entschlüsselt,
- (f): mit den empfangenen und entschlüsselten Daten zur Dekodierung werden die Nutzdaten decodiert und
- (g): anschliessend sind die empfangenen Nutzdaten für den Benutzer verfügbar.

Die Erfindung wird auch durch einen Fernserver entsprechend Anspruch 18 und ein Endgerät entsprechend Anspruch 21 gelöst. Vorteilhafte Ausführungsformen sind in den abhängigen Ansprüchen angegeben.

In einer ersten vorteilhaften Ausführungsvariante können die verschlüsselten Daten zur Dekodierung von Nutzdaten durch das Broadcastsystem programmbegleitend mit den Nutzdaten an ein gemeinsames Endgerät versendet werden. Dabei werden als Daten zur Dekodierung der Nutzdaten Berechtigungsinformationen (EMM) und Kontrollwörter (ECM) verschlüsselt. In einer zweiten Ausführungsform werden die verschlüsselten Daten zur Dekodierung von Nutzdaten oder Teile davon an ein Mobiltelefon oder ein anderes mobiles Gerät als erstes Endgerät versendet. Die Daten werden dann an ein zweites Endgerät zur Endschlüsselung weitergeleitet.

Vorteilhaft können die Nutzdaten zusammen oder getrennt mit den programmbegleitenden Daten durch DAB, DVB, GSM, UMTS, GPRS oder dem Internet als Broadcastsystem versandt werden. Als Schlüssel können symmetrische oder asymmetrische Schlüssel verwendet werden. Diese Schlüssel können aufgrund eines Fingerabdruckes, aufgrund der Erkennung des Gesichts, aufgrund der Erkennung der Iris oder Retina oder der Erkennung der Sprache des Benutzers erstellt werden, wobei für jeden Benutzer aufgrund eines bestimmten biometrischen Parameters eindeutige Schlüsseldaten erzeugt werden. Für diesen Zweck der Retinascannung könnte eine Virtual Retinal Display (VRD) verwendet werden. Dies hat den Vorteil, dassdie Erfassung der biometrischen Merkmale des Benutzers laufend und gleichzeitig zur Wiedergabe der visuellen Wiedergabe der visuellen Nutzdaten erfolgen kann. In diesem Fall handelt essich um ein interaktives Verfahren.

Die Informationen können wie bisher in einer Set Top-Box oder in einem Mobilgerät, vorzugsweise einem Mobiltelefon, als Endgerät entschlüsselt und die empfangenen Nutzdaten dort decodiert werden. Es gibt eine zusätzliche Sicherheit, wenn der zweite Schlüssel jedes Mal, wenn der Benutzer Nutzdaten empfangen will, in dem Endgerät neu erstellt wird.

Durch das vorliegende Verfahren können zugriffsbeschränkte Daten an irgendeinem Ort, im Hotel, im Büro, im Zug, auf der Geschäftsreise, etc. empfangen werden. Dasbisherige Mitnehmen einer Karte zur Entschlüsselung der Daten zur Dekodierung der Nutzdaten entfällt vorteilhaft. Durch dasvorliegende Verfahren ist esvorteilhaft möglich, den Missbrauch vom System zum zugangsbeschränkten Empfang von Daten auszuschliessen, da sich der Benutzer vor dem Empfang von Daten jedes Mal biometrisch identifizieren muss. Nur wenn der aufgrund der biometrischen Daten des Benutzerserstellte zweite Schlüssel die programmgleitenden Daten zur Dekodierung der Nutzdaten entschlüsselt, können abonnierten Nutzdaten wiedergegeben werden.

### Kurze Beschreibung der Rguren

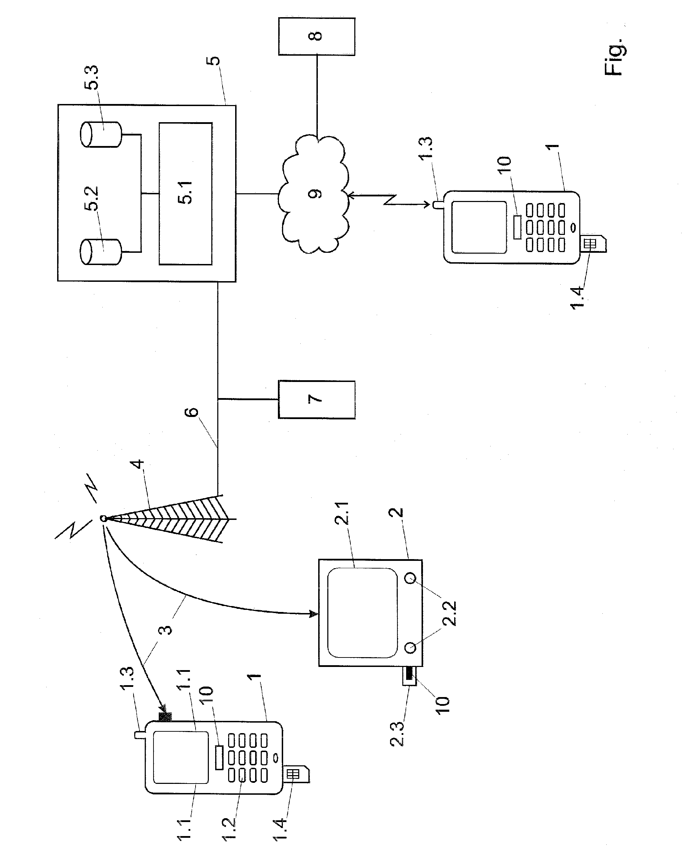

Die Erfindung wird anhand der einzigen Figuren näher erläutert, die ein System zeigt, mit welchem das erfindungsgemässe Verfahren durchgeführt werden kann. Es werden nur die für das Verständnis der Erfindung wichtigen Elemente dargestellt.

### Wege zur Ausführung der Erfindung

Die einzige Figur zeigt ein System, mit welchem das erfindungsgemässe Verfahren zum zugangsbeschränkten Empfang von Audio- und/oder Videodaten oder anderen Nutzdaten durchgeführt werden kann. En Benutzer mit einem Endgerät 1, welches mit einem Broadcastempfänger 1.5 ausgestattet ist, oder ein Benutzer mit einem anderen Broadcastempfänger 2 - wie bspw. Fernseh- oder Radiogerät - möchte dabei einen zugangsbeschränkten Dienst, eine Fernseh- oder Radiosendung, etc. im Bezahl-Fernsehen oder ausdem Internet empfangen. Der Benutzer mussdazu ein entsprechendesAbonnement zum Empfangen von Daten von einem Anbieter 8 käuflich erwerben und dieses wird ihm von diesem entsprechend verrechnet. Als Broad cast system 3 ist im Rahmen der Erfindung eine physikalische Verteilung von verschlüsselten Daten (Software, DVD, etc.) denkbar.

Die Nutzdaten werden dabei über herkömmliche Wege, wie etwa eine Satellitenübertragung, Antennenausstrahlung oder Einspeisung in ein Kabelnetz (DAB, DVB), ein Telekommunikationsnetz GSM, UMTS, über GPRSoder über das Internet von einer einer Broadcastorganisation 7 zugeordneten Sendeeinrichtung 4 codiert ausgestrahlt. Systeme wie DVB-TV, Cable TV, Bluetooth, ein System nach IEEE802.11x, UMS(Unlicensed Mobile Access) sind ebenso möglich. Zusätzlich zu diesen Nutzdaten, also dem Fernsehprogramm oder der Rundfunksendung, etc. werden standardmässig benutzerabhängige Berechtigungsinformationen (EMM) und Kontrollwörter (ECM) als programmbegleitende Daten ausgesendet. Entsprechend der vorliegenden Erfindung werden nun diese benutzerabhängigen Berechtigungsinformationen (EMM) und Kontrollwörter (ECM) mit einem ersten Schlüssel in einem Fernserver 5 benutzerabhängig verschlüsselt. Dieser erste Schlüssel ist aufgrund von biometrischen Daten oder von darausabgeleiteten Schlüsseldaten des Benutzers erstellt worden. Vom Fernserver 5 werden die Nutzdaten mit den verschlüsselten Informationen alsprogrammbegleitende Daten über eine Kommunikationsverbindung 6 zu der Sendeeinrichtung 4 geschickt und von dort aus in ein Broadcastsystem 3 gesendet. Die verschlüsselten Daten zur Dekodierung von Nutzdaten könnten auch separat an mindestens ein erstes Endgerät 1 der Benutzer (z.B. an ein Mobiltelefon) gesendet werden und wie beschrieben vom Benutzer zur Entschlüsselung der Nutzdaten dienen. Die Daten werden dann in einem Zwischenschritt an daszweite Endgerät 1 (z.B. die Set Top-Box, Videorecorder, Computer, etc.) weitergeleitet.

Der Benutzer empfängt mit seinem Endgerät 1 oder mit einem anderen Broadcastempfänger 2 diese Daten. In einer Zusatzeinrichtung, wie einer Set Top-Box 2.3, im Endgerät 1 oder einem Identifizierungsmodul des Endgeräts 1 oder der Set Top-Box werden die EM M- und ECM-Daten erfindungsgemässmit einem zweiten Schlüssel entschlüsselt. Dieser zweite Schlüssel ist ebenfallsaufgrund der biometrischen Daten oder von daraus abgeleiteten Schlüsseldaten des Benutzerserstellt worden. Sowohl das Endgerät 1 als auch die Set Top-Box 2.3 enthalten einen biometrischen Sensor 10, mit welchem der Fingerabdruck des Benutzers abgenommen wird. Esist selbstverständlich, dassauch Engabemittel des Endgeräts 1 (Fernbedienung, Tastatur, Maus, etc.) mit einem solchen Sensor ausgestattet werden können. Esist im Rahmen der Erfindung denkbar, dass sich das Endgerät 1 über eine drahtlose Schnittstelle (IrDA, Bluetooth, ZigBee, etc.) mit einem solchen Modul verbindet. Auch ein Modul, welches über einen USB-Port mit dem Endgerät 1 drahtbehaftet verbunden ist, ist in Rahmen der Erfindung möglich.

Jedes Mal, wenn der Benutzer abonnierte Daten ansehen will, wird in dem Mobilgerät 1 oder in der Set Top-Box 2.3 dieser zweite Schlüssel zur Entschlüsselung der Daten neu erstellt. Dies kann beim Enschalten des Geräts, beim Programmstart, bei einem Kanalwechsel oder erst nach einigen Minuten (das Programm wird einige Minuten unverschlüsselt gezeigt) geschehen. Mit den empfangenen und entschlüsselten Daten zur Dekodierung der Nutzdaten (Berechtigungsinformationen EMM und Kontrollwörter ECM) werden danach die Nutzdaten decodiert. Nachdem die EMM- und ECM-Daten entschlüsselt und die Nutzdaten decodiert wurden, können die angeforderten Nutzdaten (Fernsehsendung, etc.) durch ein Display 1.1, einen Bildschirm 2.1 oder einen Lautsprecher 2.2 für den Benutzer wiedergegeben werden.

Zu Erstellung des ersten und deszweiten Schlüsseln bestehen erfindungsgemäss nun verschiedene Möglichkeiten. Der erste und der zweite Schlüssel kann in dem Endgerät 1 des Benutzers erstellt werden, wobei der erste Schlüssel bei einer Erstregistrierung des Benutzers oder bei einer Erneuerung desAbonnementsan den Fernserver 5 gesendet wird. Auch eine Registrierung in einem Geschäft ist möglich. Es ist auch denkbar, dassdie biometrischen oder die daraus abgeleiteten Schlüsseldaten des Benutzers, die durch den biometrischen Sensor 10 aufgenommen und dann durch ein Programm weiter verarbeitet wurden, an den Fernserver 5 gesendet werden. Dies kann auch in einem Mobilgerät des Benutzers geschehen, welche unabhängig von dem Broadcastempfänger, der mit dem Fngerabdrucksensor ausgestattet ist, sein kann. Gleichzeitig könnte auch der Broadcastempfänger für diesen Zweck verwendet werden, so dass nur ein Endgerät 1 verwendet werden würde. Der erste Schlüssel wird dann in dem Fernserver 5 erstellt, während der zweite Schlüssel aufgrund der biometrischen oder der darausabgeleiteten Schlüsseldaten lokal in dem Mobilgerät 1 oder in der Set Top-Box 2.3 erstellt wird. Für jeden Benutzer werden zuvor aufgrund einesbestimmten biometrischen Parameters eindeutige Schlüsseldaten erzeugt. En Bild einesaufgenommen Fingerabdrucks ist jedes Mal ein bisschen verschieden. Eswird aber ein Algorithmusoder ein Programm verwendet, der auseinem variablen Bild eines Fingerabdrucks eine eindeutige Nummer bzw. andere eindeutige Schlüsseldaten (algorithmische Sequenz oder Matrix) erzeugt. So kann jedes Mal ein eindeutiger zweiter Schlüssel erstellt werden, der zur Entschlüsselung der mit dem ersten Schlüssel verschlüsselten Daten dient. Auch die anderen verwendeten biometrischen Parameter, die später noch erwähnt werden, werden einem solchen Algorithmusunterzogen.

Wie in der einzigen Figur sichtbar, ist das mobile Endgerät 1 mit einem Identifikationmodul 1.4, beispielsweise einer SM-Karte, und einer Antenne 1.3 ausgestattet und so in ein Netz 9 eingebunden. Als Netz 9 können beispielsweise bekannte Mobilfunknetze wie GSM, UMTSoder auch DAB, DVB oder andere ausdem Stand der Technik bekannte Netze verwendet werden. Auf diese Weise können ein lokal erzeugter erster Schlüssel, die vom Sensor 10 aufgenommenen biometrischen Daten oder die daraus abgeleiteten Schlüsseldaten an den Fernserver 5 gesendet werden. Dieskann zum gleichen oder zu einem anderen Zeitpunkt gesehen, wenn der Benutzer seine Abonnementsdauer und den Abonnementsinhalt, den er empfangen will, an den Fernserver 5 sendet. Über die Tastatur 1.2 des mobilen Endgeräts 1 kann der Benutzer die gewünschten Daten, die seinem Abonnent entsprechen, eingeben und versenden. Die gewünschten Nutzdaten können auch zum Beispiel durch Lesen eines Barcodes aus einer Fernsehzeitschrift bestimmt werden. Dies ist auch beispielsweise durch Aufnehmen des Barcodes mit einer in ein Mobilfunkgerät eingebauten Kamera oder einem angeschlossenen Barcodeleser möglich. Auch eine sprachgesteuerte Eingabe, durch die der Benutzer nach dem Anrufen einer Telephonnummer geführt wird, ist denkbar. Esist für den Fachmann eindeutig, dass das Abonnieren auch über ein Kommunikationsnetz wie das Internet oder ein Festnetz geschehen kann. Esist auch denkbar, dassder Benutzer sich an einem Schalter oder in einem Geschäft, etwa beim Kauf der Set Top-Box 2.3, registrieren lässt, seine gewünschten Inhalt angibt und seinen Fingerabdruck oder andere biometrische Informationen zur Erzeugung des ersten Schlüsselsabnehmen lässt.

Esist entsprechend der Erfindung möglich, einen ersten Schlüssel alsein öffentlichen Schlüssel zu erstellen und einen zweiter Schlüssel als privaten Schlüssel. WO-A-98/48538 offenbart beispielsweise ein Verfahren zum Erzeugen von einem privaten Schlüssel ausden biometrischen Daten des Benutzers. Ein solcher Schlüssel könnte verwendet werden, um die EM M- und ECM-Daten zu entschlüsseln. In einer weiteren Ausführungsform wird aufgrund der biometrischen oder der darausabgeleiteten Daten nur ein einziger, symmetrischer Schlüssel erstellt. Dieser Schlüssel dient als gleichzeitig als erster und zweiter Schlüssel innerhalb des erfindungsgemässen Verfahrens. Die genannten EMM- und ECM-Daten werden also nur mit diesem Schlüssel in Fernserver 5 ver- und lokal beim Benutzer wieder entschlüsselt.

Es ist ersichtlich, dasserfindungsgemässder erste und der zweite Schlüssel aufgrund zahlreicher biometrischer Daten erstellt werden kann. Es wurde bereitserwähnt, dasssie aufgrund eines von einem Benutzer abgenommen Fngerabdruckeserstellt werden können. Andere biometrische Daten wie Gesichts-, Retina- oder Iriserkennung, Sprachanalyse, etc. sind im Rahmen der Erfindung denkbar. Für die Spracherkennung wird der erwähnte biometrische Sensor 10 ein Mikrophon sein. Für diesen Zweck der Retinascannung könnte eine Virtual Retinal Display (VRD) verwendet werden. Dies hat den Vorteil, dassdie Erfassung der biometrischen Merkmale des Benutzers laufend und gleichzeitig zur Wiedergabe der visuellen Wiedergabe der visuellen Nutzdaten erfolgen kann. In diesem Fall handelt essich um ein interaktives Verfahren. In einer weiteren Ausführungsform wird lediglich geprüft, ob der biometrische Parameter einer bestimmten Gruppe zuzuordnen ist. Da die Fingerabdrücke von Kindern sich deutlich von Fingerabdrücken von Erwachsenen unterscheiden, könnte diesschon ein Schutz vor einem unerlaubten Zugriff sein. Auch eine Stimmanalyse kann den Unterschied zwischen Kindern, Frauen, Männern machen und so nur den Zugriff einer vorgesehenen Zielgruppe auf die Nutzdaten zulassen.

In einer Ausführungsform der vorliegenden Erfindung werden durch verschiedene Finger (bzw. durch verschiedene Fingerabdrücke) unterschiedliche Schlüssel erzeugt. So können, ohne lange nachdenken zu müssen, auf verschiedene, abonnierte Nutzdaten oder Dienste zugegriffen werden. Diese Dienste werden, wie bereitserklärt, mit einem Schlüssel verschlüsselt, der durch einen entsprechenden Fingerabdruck erzeugt wurde. Die verschiedenen Mechanismen zur Verschlüsselung (symmetrischer, asymmetrischer Schlüssel) sind äquivalent anwendbar.

Das erfindungsgemässe Verfahren erlaubt auch ein Gruppen-oder Familienmanagement. So können für die Kinder andere Programm abonniert werden alsfür die Erwachsenen. Esist einfach sichergestellt, dass die Kinder keinen Zugriff auf Nutzdaten haben, die nicht für sie bestimmt sind. Oder innerhalb einer Wohngemeinschaft können die verschiedenen Mitglieder ein persönliches Programm abonnierten.

Der Anbieter 8 von Pay-TV könnte auch den Fernserver 5 betreiben und die vom Benutzer angegebenen Informationen entgegennehmen und sie verwalten. Es ist auch denkbar, dassder Anbieter 8 der Nutzdaten diese Aufgabe an den anderen Betreiber einessolchen Fernservers5 abgibt. Der Fernserver 5 enthält zu diesem Zweck eine Systemdatenbank 5.1, die sowohl persönliche Kundendaten 5.2 als auch eine allgemeine Broadcast und Contentverwaltung 5.3 für die vom Kunden abonnierten Daten enthält. Die Kundendaten 5.2 enthalten auch die erzeugten ersten Schlüssel, die für jeden Kunden individuell sind. Der Fernserver 5 kann für verschiedene Anbieter 8 von Nutzdaten auch aus verschiedenen Ländern betrieben werden.

Die vorliegende Erfindung bezieht sich auch auf einen Fernserver 5, welcher ein Programm zur Verschlüsselung von Daten zur Dekodierung von Nutzdaten enthält, wobei die Daten zur Dekodierung von Nutzdaten mit einem Schlüssel, der aufgrund der biometrischen oder daraus abgeleiteter Schlüsseldaten des Benutzerserstellt worden ist, verschlüsselt werden. Eskönnen vorteilhaft Mittel vorhanden sein, um die Nutzdaten einer Vielzahl von Anbietern, die Abonnementsvon einer Vielzahl von Kunden und um eine Vielzahl von individuellen Schlüsseln, die aufgrund der biometrischen oder daraus abgeleiteter Schlüsseldaten des Benutzers erstellt worden sind, von verschiedenen Kunden zu verwalten.

Die Erfindung bezieht sich weiter auf ein Endgerät 1, welches Mittel zur Erzeugung eines Schlüssel sumfasst, wobei der Schlüssel aufgrund der biometrischen oder daraus abgeleiteter Schlüsseldaten des Benutzers erstellt wird, und wobei der erzeugte Schlüssel zur Entschlüsselung von durch ein Broadcastsystem 3 empfangenen programmbegleitenden Daten zur Dekodierung von Nutzdaten verwendet wird. Wie bereitsausgeführt, wird das Endgerät 1 einen biometrischen Sensor 10 und Mittel enthalten, um für jeden Benutzer aufgrund eines bestimmten biometrischen Parameters ei ndeutige Schlüsseldaten zu erzeugen.

En beschriebenes Mobiltelefon als Endgerät 1, welches mit einem biometrischen Sensor 10 und einem Broadcastempfänger 1.5 ausgestattet ist, erlaubt den Empfang von zugriffsbeschränkten Daten an irgendeinem Ort, im Hotel, im Büro, im Zug, auf der Reise, etc. Das bisherige Mitnehmen einer Karte zur Entschlüsselung der Daten zur Dekodierung der Nutzdaten entfällt vorteilhaft. Durch dasvorliegende Verfahren ist esweiter vorteilhaft möglich, den Missbrauch von System zum zugangsbeschränkten Empfang von Daten auszuschliessen, da sich der Benutzer vor dem Empfang von Daten jedes Mal biometrisch identifizieren muss. Nur wenn der aufgrund der biometrischen Daten des Benutzers erstellte zweite Schlüssel die EM M- oder ECM-Daten entschlüsselt, können abonnierten Daten auch wiedergegeben werden.

### Bezugszeichenliste

- 1: Endgerät
- 1.1: Display
- 1.2: Tastatur
- 1.3: Antenne
- 1.4: Identifikationsmodul
- 1.5: Broadcastempfänger

- 2: Broad cast empfänger
- 2.1: Bildschirm
- 2.2: Lautsprecher
- 2.3: Set Top-Box
- 3: Broad cast system
- 4: Sendeeinrichtung
- 5: Fernserver
- 5.1: Systemdatenbank
- 5.2: Kundendaten
- 5.3: Broadcast- und Contentverwaltung
- 6: Kommunikationsverbindung
- 7: Broadcastorganisation
- 8: Anbieter
- 9: Netz
- 10: Biometrischer Sensor

## Patentansprüche

1. Verfahren zum zugangsbeschränkten Empfang von Nutzdaten, wobei das Verfahren die folgenden Verfahrensschritte umfasst
(a) ein erster Schlüssel zur Verschlüsselung von Daten und ein zweiter Schlüssel zur Entschlüsselung der mit dem ersten Schlüssel verschlüsselten Daten werden aufgrund der biometrischen oder daraus abgeleiteter Schlüsseldaten des Benutzerserstellt,
(b) in einem Fernserver (5) werden Daten zur Dekodierung von Nutzdaten mit dem ersten Schlüssel verschlüsselt,
(c) die verschlüsselten Daten zur Dekodierung von Nutzdaten werden an mindestens ein erstes Endgerät (1) des Benutzers gesendet,
(d) die codierten Nutzdaten werden durch ein Broadcastsystem (3) zum Benutzer versendet und in einem zweiten Endgerät (1) des Benutzers empfangen werden,
(e) in dem zweiten Endgerät (1) des Benutzerswerden die empfangenen Daten zur Dekodierung von Nutzdaten mit dem zweiten Schlüssel entschlüsselt,
(f) mit den empfangenen und entschlüsselten Daten zur Dekodierung werden die Nutzdaten decodiert und
(g) anschliessend sind die empfangenen Nutzdaten für den Benutzer verfügbar.

2. Verfahren nach Anspruch 2, **dadurch gekennzeichnet, dass** als Daten zur Dekodierung der Nutzdaten Berechtigungsinformationen (EMM) und Kontrollwörter (ECM) verschlüsselt werden.

3. Verfahren nach Anspruch 1 oder 2, **dadurch gekennzeichnet, dass**die verschlüsselten Daten zur Dekodierung von Nutzdaten durch das Broadcastsystem (3) programmbegleitend mit den Nutzdaten an ein gemeinsames Endgerät (1) als erstes und zweites Endgerät versendet werden.

4. Verfahren nach Anspruch 1 oder 2, **dadurch gekennzeichnet, dass**die verschlüsselten Daten zur Dekodierung von Nutzdaten oder Teile davon an ein Mobiltelefon alserstes Endgerät (1) versendet werden und die Daten an daszweite Endgerät (1) weitergeleitet werden.

5. Verfahren nach einem der Ansprüche 1 bis4, **dadurch gekennzeichnet, dass**die Nutzdaten und/oder die Daten zur Dekodierung von Nutzdaten durch DAB, DVB, DVB-TV, Cable TV, Blueotooth, System nach IEEE 802.11x, UMS, GSM, UMTS, GPRS oder dem Internet als Broadcastsystem (3) versandt werden.

6. Verfahren nach einem der Ansprüche 1 bis5, **dadurch gekennzeichnet, dass** als erster Schlüssel ein öffentlicher Schlüssel und als zweiter Schlüssel ein privater Schlüssel erstellt wird.

7. Verfahren nach einem der Ansprüche 1 bis5, **dadurch gekennzeichnet, dass**nur ein einziger, symmetrischer Schlüssel als erster und zweiter Schlüssel erstellt wird und die genannten Informationen mit dem einzigen Schlüssel ver- und wieder entschlüsselt werden.

8. Verfahren nach einem der Ansprüche 1 bis 7, **dadurch gekennzeichnet, dass**der erste und der zweite Schlüssel in dem Endgerät des Benut zers erstellt werden und der erste Schlüssel an den Fernserver (5) gesandt wird.

9. Verfahren nach einem der Ansprüche 1 bis8, **dadurch gekennzeichnet, dass**die biometrischen oder die darausabgeleiteten Schlüsseldaten des Benutzers an den Fernserver (5) gesendet werden, der erste Schlüssel in dem Fernserver (5) erstellt wird und der zweite Schlüssel aufgrund der biometrischen oder der daraus abgeleiteten Schlüsseldaten in dem Endgerät (1) erstellt wird.

10. Verfahren nach einem der Ansprüche 8 oder 9, **dadurch gekennzeichnet, dass**der erster Schlüssel, die biometrischen Daten oder die daraus abgeleiteten Schlüsseldaten über ein Telekommunikationsnetz, vorzugsweise ein Mobilfunknetz, an den Fernserver (5) gesendet werden.

11. Verfahren nach einem der Ansprüche 8 bis 10, **dadurch gekennzeichnet, dass**der Benutzer gleichzeitig mit den Verschlüsselungsdaten oder zu einem anderen Zeitpunkt seine Abonnementsdauer und den Abonnementsinhalt, den er empfangen will, über ein Telekommunikationsnetz, vorzugsweise ein Mobilfunknetz, an den Fernserver (5) sendet.

12. Verfahren nach einem der Ansprüche 1 bis 11, **dadurch gekennzeichnet, dass**der erste und der zweite Schlüssel aufgrund eines Fngerabdruckes, aufgrund der Erkennung des Gesichts, aufgrund der Erkennung der Irisoder Retina oder der Erkennung der Sprache des Benutzerserstellt werden.

13. Verfahren nach einem der Ansprüche 1 bis 12, **dadurch gekennzeichnet, dass**zur Abnahme der biometrischen Daten und zur gleichzeitigen Wiedergabe der Nutzdaten ein Virtual Retina Display (VRD) verwendet wird.

14. Verfahren nach einem der Ansprüche 1 bis 13, **dadurch gekennzeichnet, dass**für jeden Benutzer aufgrund einesbestimmten biometrischen Parameterseindeutige Schlüsseldaten erzeugt werden.

15. Verfahren nach einem der Ansprüche 1 bis 14, **dadurch gekennzeichnet, dass**die Daten zur Dekodierung von Nutzdaten in einer Set Top-Box (2.3), in einem Mobilgerät, vorzugsweise einem Mobiltelefon, als Endgerät (1) oder einem Identifikationsmodul des Endgeräts(1) entschlüsselt und die empfangenen Nutzdaten dort decodiert werden.

16. Verfahren nach einem der Ansprüche 1 bis 15, **dadurch gekennzeichnet, dass**der zweiten Schlüssel jedes Mal, wenn der Benutzer Nutzdaten empfangen und/oder dekodieren will, in dem Endgerät (1) neu erstellt wird.

17. Verfahren nach einem der Ansprüche 1 bis 16, **dadurch gekennzeichnet, dass**die verschlüsselten Informationen als programmbegleitende Daten mit Audio- und/oder Videodaten versendet werden.

18. Verfahren nach einem der Ansprüche 1 bis 17, **dadurch gekennzeichnet, dass**der Benutzer für ein entsprechendesAbonnement zum Empfangen von Nutzdaten an einem Anbieter (8) der Nutzdaten bezahlt.

19. Fernserver (5), welcher ein Programm zur Verschlüsselung von Daten zur Dekodierung von Nutzdaten enthält, wobei die Daten zur Dekodierung von Nutzdaten mit einem Schlüssel, der aufgrund der biometrischen oder daraus abgeleiteter Schlüsseldaten des Benutzers erstellt worden ist, verschlüsselt werden.

20. Fernserver (5) nach Anspruch 19, **dadurch gekennzeichnet, dass** Mittel vorhanden sind, um die Nutzdaten einer Vielzahl von Anbietern, die Abonnementsvon einer Vielzahl von Kunden und um eine Vielzahl von individuellen Schlüsseln, die aufgrund der biometrischen oder daraus abgeleiteter Schlüsseldaten desBenutzerserstellt worden sind, von verschiedenen Kunden zu verwalten.

21. Endgerät (1), welches Mittel zur Erzeugung eines Schlüssels umfasst, wobei der Schlüssel aufgrund der biometrischen oder daraus abgeleiteter Schlüsseldaten des Benutzerserstellt wird, und wobei der erzeugte Schlüssel zur Entschlüsselung von durch ein Broadcastsystem (3) gesandten programmbegleitenden Daten zur Dekodierung von Nutzdaten verwendet wird.

22. Endgerät (1) gemäss Anspruch 21, **dadurch gekennzeichnet, dass**eseinen biometrischen Sensor (10) und Mittel oder ein Programm enthält, für jeden Benutzer aufgrund eines bestimmten biometrischen Parameterseindeutige Schlüsseldaten zu erzeugen.

23. Endgerät (1) gemässAnspruch 21 oder 22, **dadurch gekennzeichnet, dass**das Endgerät (1) ein Mobilgerät, vorzugsweise ein Mobiltelefon, oder eine Set Top-Box (2.3) ist.
